# EUROPEAN PATENT APPLICATION

(11) **EP 4 510 477 A1**
(43) Date of publication of application: **19.02.2025**
(21) Application number: 23191247.8
(22) Date of filing: 14.08.2023
(51) Int. Cl.: H04J 3/06, H04J 3/12

(54) **SYNCHRONIZATION BETWEEN A FIRST AND A SECOND TIME DOMAIN**

(71) Applicant: Siemens Aktiengesellschaft, 80333 München (DE)
(72) Inventor: Zirkler, Andreas, 85521 Ottobrunn (DE); Walewski, Joachim, 82008 Unterhaching (DE)
(74) Representative: Siemens Patent Attorneys

(57) **Abstract**

A method of time synchronization between a first and a second time domain (D1, D2) in a bridged network (10), the method comprising the steps of: transmitting a plurality of time synchronization packets (11) from the first to the second time domain (D1, D2) over a, preferably wireless, communication link (20), and correcting a timing information in the second time domain (D2) based on the plurality of synchronization packets (11).

## Description

### TECHNICAL FIELD

The present disclosure relates to synchronization of network nodes such as bridges, switches, routers and/or end devices in order to allow for certain functions such as inter alia time scheduling (IEEE 802.1Qbv) and configuration of stream gates for PSFP (IEEE 802.1Qci) as well as synchronization of one or more applications in particular for industrial automation systems.

### BACKGROUND

In Ethernet according to IEEE 802.3 and Ethernet bridging according to IEEE 802.1Q, time is very important for real-time communication in networks, such as Time-Sensitive Networking, TSN. For real-time communication with hard, non-negotiable time boundaries for end-to-end transmission latencies, all devices in a network need to have a common time reference and therefore, need to synchronize their clocks among each other. This is not only true for the end devices, such as an industrial controller or a manufacturing robot, but also true for network components, such as bridges. Only through synchronized clocks, it is possible for all network devices to operate in unison and execute the required operation at exactly the required point in time. Although time synchronization in TSN networks can be achieved with a GPS clock, this is costly and there is no guarantee that the endpoint device has access to the radio or satellite signal at all times. Due to these constraints, time in networks, such as TSN, is usually distributed from one central time source directly through the local area network, LAN, itself using the IEEE 1588 Precision Time Protocol, which utilizes Ethernet frames to distribute time synchronization information. IEEE 802.1AS is a subset of IEEE 1588 with sub-microsecond precision and extensions to support synchronisation over WiFi radio (IEEE 802.11).

### SUMMARY

Some real-time applications, in particular in industrial automation systems, require a common time to function correctly. Some applications, in particular so-called motion control applications, pose very high requirements concerning the accuracy of this common time, i.e., in distributed systems to the synchronization of distributed clocks. The Precision Time Protocol (PTP, IEEE 802.1AS-2020) guarantees a synchronization jitter of less than 1 us over seven hops. Currently, in IEEE 802.1ASdm up to 100 hops with the same synchronization quality is envisioned.

At the same time, wireless connections, e.g., via WiFi6 or 5G, are used and/or integrated into such synchronized networks. However, the above-mentioned synchronization qualities are a challenge in wireless networks. For example, in TSN over 5G, a time synchronicity budget of 900ns is provided for the 5G part, which means a residual synchronization budget of only 100 ns for the wired network part. Thus, in a network with wireless and wired segments or links, an end-to-end synchronization jitter of 1µs may not be achievable. Such a network is present, for example, when one or more automated guided vehicles, AGVs, operate in an industrial automation system, such as on a factory floor. A control system or traffic control of the AGV will typically not require such stringent requirements for the synchronization accuracy, but such stringent requirements may need to be met within the AGV, for example, when several drive axles, e.g., with one or more mecanum wheels, need to be controlled synchronously.

So far, a network with wireless and wired network segments or links as described herein may only be realized by independently synchronized time domains, e.g., one time domain on the AGV and another time domain in the wired factory network. This has the disadvantage that the clocks in the different time domains, e.g., on the different AGVs, are not synchronized with each other. This, for example, entails that logs and/or diagnostic information from different network nodes, e.g., on different AGVs, may not be correlated with each other in time.

It is an object of the present invention to provide a mechanism for time synchronization and more specifically to improve the time synchronization between different time domains .

The object is achieved according to the following aspects.

According to a first aspect, a method of time synchronization between a first and a second time domain in a bridged network is proposed. The method comprising the step of transmitting a plurality of time synchronization packets from the first to the second time domain over a, preferably wireless, communication link. The method further comprising the step of correcting a timing information in the second time domain based on the plurality of synchronization packets.

According to a second aspect, an apparatus operative to perform the method steps according to the first aspect is proposed. The apparatus preferably being a router, switch or network bridge. The apparatus preferably comprising a processor and a memory.

According to a third aspect, a bridged network comprising a first and a second time domain coupled by an apparatus according to the second aspect is proposed.

According to a fourth aspect, a computer program preferably stored on a non-transitory medium, comprising program code that when executed performs the method steps according to the first aspect is proposed.

Further advantageous aspects are described herein.

### BRIEF DESCRIPTION OF THE DRAWINGS

- Figure 1: shows a bridged network.
- Figure 2: shows an industrial automation system and an illustration of network behavior.
- Figure 3: shows an illustration of transmission of timing information for time synchronization in a network.
- Figure 4: shows an illustration of a PTP (IEEE 802.1AS) compliant synchronization in a TSN network comprising a 5G system.
- Figure 5: shows a network with two network segments and corresponding time domains connected via a wireless link.
- Figure 6: shows an illustration of a time synchronization packet.
- Figures 7 to 16: shows exemplary method steps.
- Figure 17: shows an exemplary embodiment of a network for synchronization of two time domains in a network.

### DETAILED DESCRIPTION

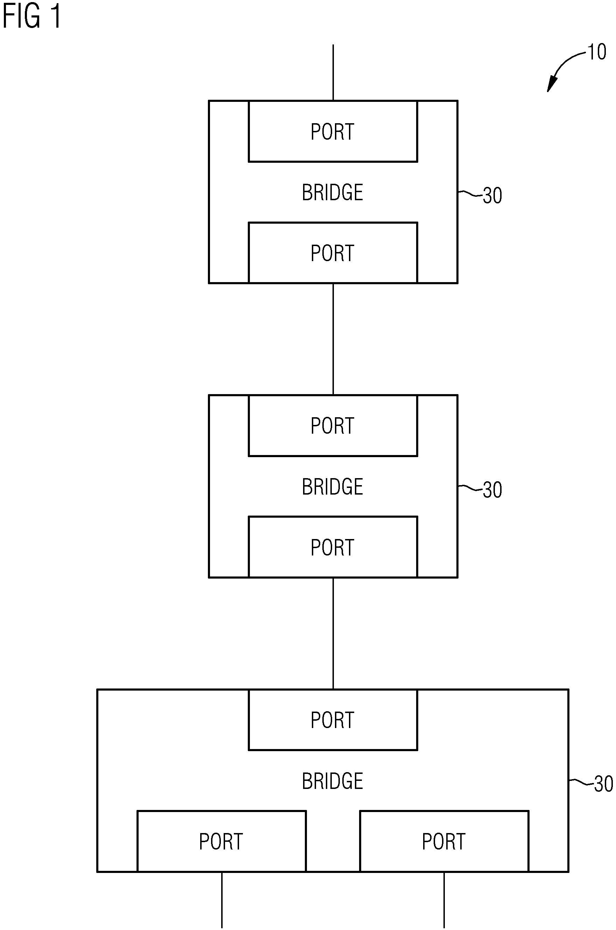

A bridged network 10 is shown in Figure 1. A bridged network 10 is a concatenation of individual local area networks, LAN, or network segments, e.g., according to IEEE 802 Local Area Networks, which are interconnected by one or more bridges 30.

Local Area Networks can be connected together with Media Access Control (MAC) bridges or Virtual Local Area Network (VLAN) bridges, collectively known as bridges. A LAN provides a Media Access Control (MAC) Service, e.g., equivalent to the MAC Service defined in IEEE Std 802.1AC. IEEE 802 LANs may include IEEE 802.3 (Ethernet) and IEEE 802.11 (Wireless) LANs.

A bridge (as IEEE 802.1 calls switches) may only have one-to-one connections, so called links, from one bridge port to one port of another bridge or end station. Multiple of such bridges and links may form a LAN. In any case, a bridge, e.g., a TSN bridge, may support one-to-many connections.

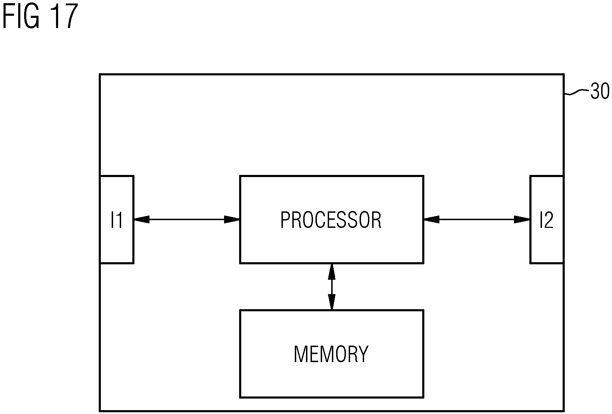

A bridge 30 is a device or apparatus that includes Media Access Control (MAC) or Virtual Local Area Network (VLAN) component functionality and/or that is capable of attaching directly to one or more LAN, e.g., such as an IEEE 802 LAN, preferably via one or more bridge ports or bridge interfaces I1, 12, cf. also Figure 17.

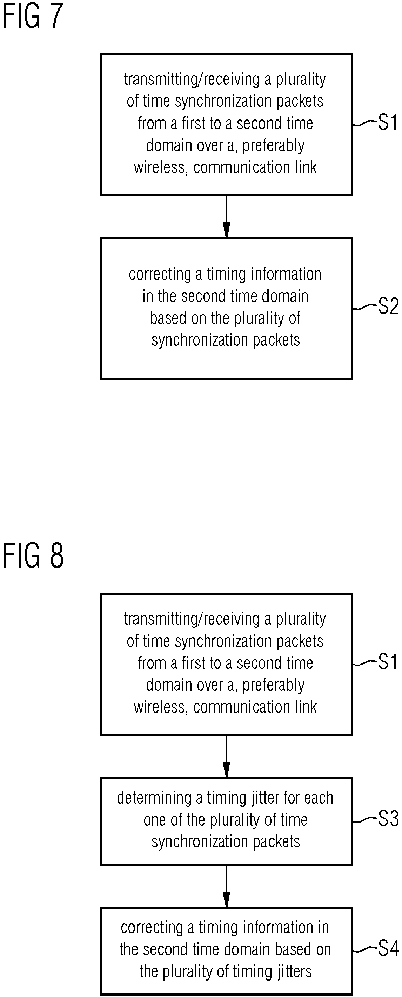

A bridge relays packets, or frames, such as MAC user data frames or a unit of data transmission on an IEEE 802 Local Area Network (LAN) that conveys a Media Access Control (MAC) Protocol Data Unit (MPDU), between the separate MACs of the individual LANs or network segments connected to its ports. A bridge 30 may comprise an architecture, i.e., bridge components, for example in accordance with IEEE 802.1Q-2014 and as shown in Figure 8-2 and/or 8-3 thereof and/or according to IEEE 802.1Q-2018.

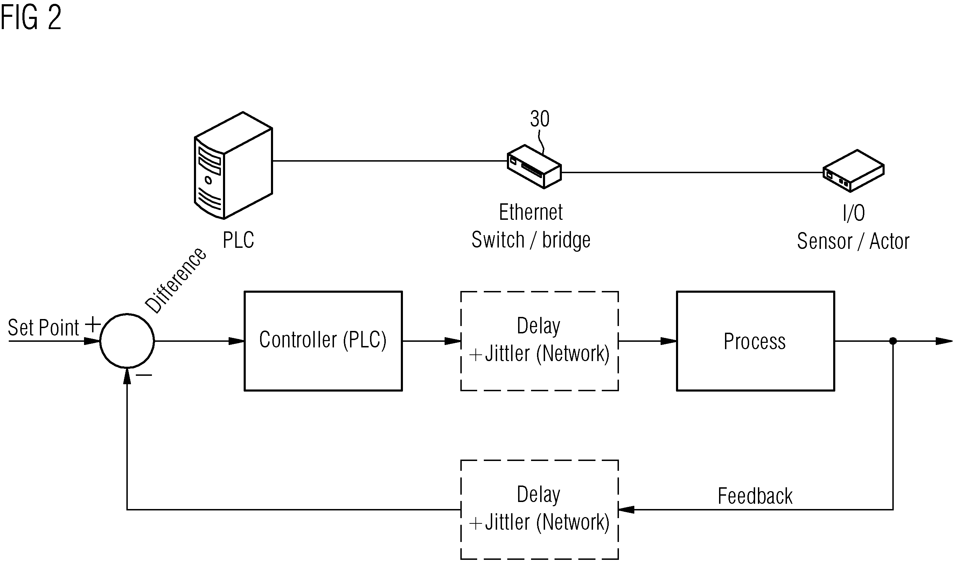

As shown in Figure 2, a process in an industrial automation system, such as a factory, is typically based on open loop or closed loop controls. In such a system it is a requirement to determine when certain measurements occurred. For a deterministic behavior of the control application, e.g., in a programmable logic controller, PLC, the network behavior needs to be known. The network behavior may be defined by parameters like jitter and/or latency. Moving to larger systems, comprising more than the three network nodes, i.e. PLC, switch and sensor/actor shown in Figure 2, that interact and draw constraints on each other the communication should be well defined. Such constraints may comprise the QoS requirements of the network (nodes) and/or applications, and/or aligning the network (nodes) with the one or more QoS requirements.

The solution aimed at in an industrial automation system is expected to use standard Ethernet (IEEE 802.3), WLAN (IEEE 802.11) and/or 5G (3GPP) technologies, which may be combined with time-critical enhancements like the TSN standards specified by IEEE 802.1.

TSN is a set of standards specified by IEEE 802.1 to enable Ethernet networks to give certain Quality-of-Service, QoS, guarantees to time and/or mission critical traffic and/or time and/or mission critical applications, such as open- and/or closed-loop control applications. Different TSN standards provide different guarantees. As devices from different vendors should be compatible in their functionality, profiles like the IEC/IEEE 60802 for industrial automation systems are being defined. Such profiles focus on the common set of functionality and configuration, in order to decrease the complexity which is afforded by the standards.

Time synchronization in a network, in particular of an industrial automation system, is very important for providing deterministic behavior for network nodes, in particular for end devices. Furthermore, some of the TSN mechanisms also require time synchronization. The TSN standard for time synchronization is the IEEE 802.1AS generalized Precision Time Protocol (gPTP) standard, which is a profile of the IEEE Std 1588 Precision Time Protocol (PTP). It allows time synchronization over and in a network, e.g., an Ethernet network, eventually comprising one or more network segments. Clock synchronization is required for supporting TSN scheduled traffic (IEEE 802.1Qbv) and/or may be needed for Per-Stream Filtering and Policing (IEEE 802.1Qci), ensuring that the bridges and end-stations can operate on a schedule based on a common sense of time.

The (generalized) PTP, (g)PTP, synchronization operates as defined in IEEE Std 1588: a grandmaster PTP instance sends information including the current synchronized time to all directly attached (g)PTP instances, which for example are located on the network nodes, e.g., using Ethernet multicast. Such time information, e.g., comprising one or more times or time stamps, may be transmitted using one or more synchronization packets. Each of these PTP instances must correct the received synchronized time by adding the propagation time needed for the information to transit the (g)PTP communication path from the grandmaster PTP instance. If the PTP instance is a PTP relay instance, then it must forward the corrected time information (including additional corrections for delays in the forwarding process) to all the other attached PTP instances.

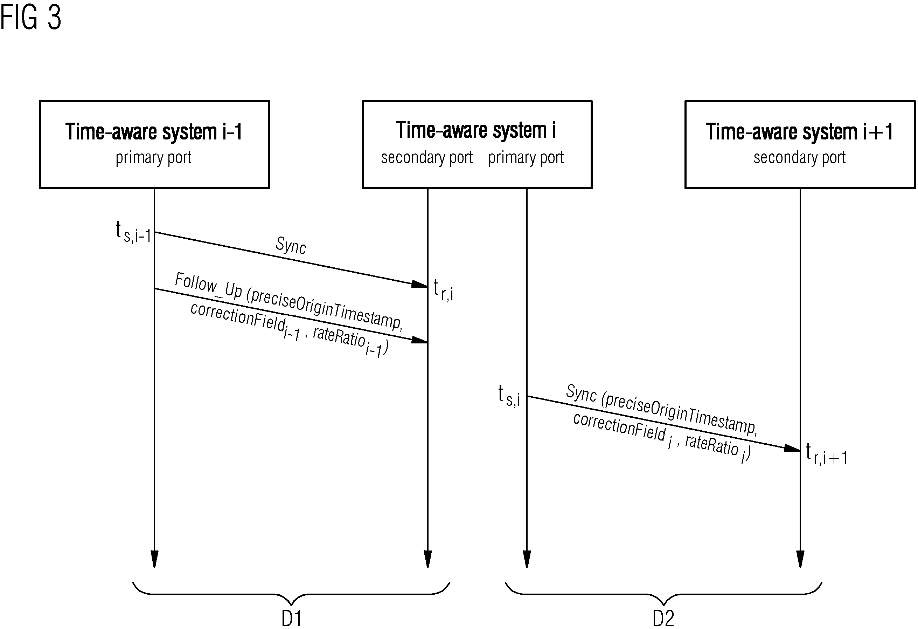

Figure 3 shows an example of transmission of time (synchronization) information, for example in synchronization packets, in three adjacent, e.g., time-aware and/or to-be-synchronized, network nodes. In general, the network nodes may be in the same or different time domains of a, for example bridged, network. As mentioned, a network node may be an apparatus or device such as a bridge, switch or end device. For example, time-aware system or network node i-1 may be located in a first network segment and/or first time domain, whereas time-aware system or network node i and/or i+1 may be located in a second network segment or second time domain.

Time information for synchronization is transported from network node and/or PTP instance i-1 to network node and/or PTP instance i using two-step time transport, and then to network node and/or PTP instance i+1 using one step time transport according to 11.1.3 Transport of time-synchronization information of IEEE P802.1AS, e.g., in the January 16, 2019 draft version D8.0. It should be understood that any of the two methods may be applied alone or in combination with each other for time synchronization between two or more network nodes and/or PTP instances.

A primary port of a first network node (i-1) sends "Sync" and "Follow_Up" messages to the PTP instance at time-aware network node i at local clock time "ts,i-1". The (time-aware) network node i receives the "Sync" message from the first node, and then timestamps the receipt of the message, and the timestamp value is "tr,i". After receiving a "Follow_Up" message, the (time-aware) network node i computes the "correc-tionField(i)" which includes the residence time of the (time-aware) network node i, and the propagation delay between (time-aware) network node i-1 and i. Finally, the (time-aware) network node i sends a new "Sync" message at time "ts,i", with the newly calculated "correctionField(i)". The network node and/or PTP instance i will eventually send a new sync message at time ts,i, relative to its LocalClock entity. The time ts,i may occur after the Follow_Up message is received from PTP Instance i-1. The correctionField(i), i.e., the difference between the synchronized time that corresponds to ts,i and a preciseOriginTimestamp needs to be computed, cf. 11.1.3 Transport of time-synchronization information of IEEE P802.1AS, e.g., in the January 16, 2019 draft version D8.0. To do this, the network node and/or PTP instance may need to compute the value of the time interval between ts,i-1 and ts,i, expressed in the grandmaster time base. It should be understood that any of these "Sync" or "Follow_Up" messages comprising a time stamp is or may serve as a synchronization packet.

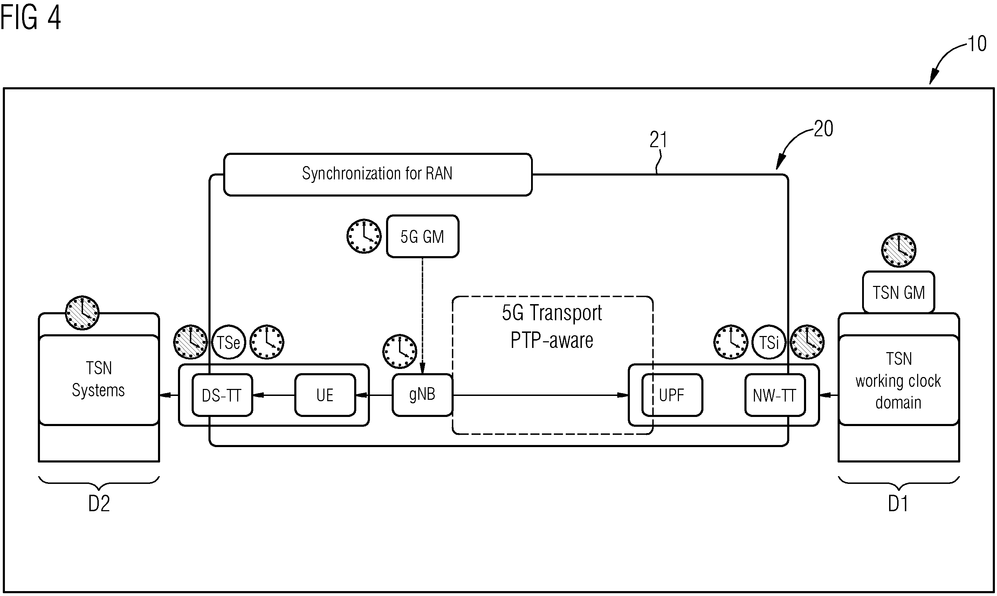

Turning to Figure 4, time synchronization between a grandmaster clock, TSN GM, in a first time domain D1 and a network node in a second time domain D2 is illustrated. The grandmaster clock, TSN GM, serves as a time source in the first time domain but is also connected to the network node in the second time domain D2 via a wireless link, in this case a wireless link, UU, between UE and gNB in a 5G system, 5GS. Therein the 5GS is modelled as a virtual bridge connecting a first network segment of the grandmaster clock with a network node of a second network segment. In Figure 4, a TSN network is shown - but other networks may be used. For example, in a brownfield deployment, TSN can be partly introduced in the backbone segment, TSN-capable devices can be connected to legacy Ethernet devices and vice versa, without the need for protocol translators or gateways.

Time synchronization in a TSN network is achieved by distributing time within a time domain. A device can be part of two different types of time domains simultaneously. First, a Global/Universal time domain may be provided, which provides date and time, typically for the whole plant/factory. Secondly, a working clock time domain may be provided, typically one for each single (or set of) machine/cell/line, which provides a high accuracy time reference.

For some industrial applications, e.g., isochronous or cyclic synchronous applications, the application and/or network access can be synchronized to the working clock of a time domain. This means that TSN bridges in the time domain (at least those that make use of IEEE 802.1Qbv and time-based PSFP) need to have a common understanding of time between the application data cycle, the network cycle and/or the scheduling cycle. In this case, the working clock is used to synchronize the application, and/or it may be used to synchronize network access. The end devices and/or TSN bridges may be synchronized to a common time in the whole network, e.g., a TSN domain. This, however, may lead to certain disadvantages as described herein. Instead, a loose coupling between two time domains D1, D2 is proposed, wherein a time source, such as a TSN working clock or a grandmaster clock, are located in a first network segment and/or time domain and other network nodes are located in a second network segment and/or time domain, e.g., separated by said 5G system or other wireless network or link.

5G, the next generation of 3GPP technologies, offers capabilities that are specifically designed to meet industrial vertical needs, such as the Ultra-Reliable Low-Latency Communication, URLLC, in 5G-NR, support for TSN, and the network deployment scenarios for Non-Public Network operation ranging from standalone Non-Public Networks to Public Network Integrated Non-Public Networks. 3GPP has adopted in release 16 the 5G-TSN integration for the time sensitive communication.

For the integration with TSN, the 5G system interoperates in a transparent manner such that impact on other TSN entities is minimized. The 5GS is modelled as a "virtual" or "logical" TSN bridge providing control plane connectivity and/or TSN ports at the user plane. This model includes a TSN Translator, TT, functionality that is available at the UE side using as a so-called device-side TT, DS-TT, and at the UPF side using a so-called network-side TT, NW-TT. In this way, the details of communication inside the 5G system are not exposed and/or the 5G system acts as a TSN bridge for the connected TSN domain. A UPF and all UEs connected to the UPF are modelled as part of a (virtual) bridge. The 5G system may have more than one UPF and therefore can be modelled as multiple 5G system bridges. Every DS-TT port may be associated to a specific PDU session in the 5GS, and every NW-TT port may be associated to a physical port at the UPF. All PDU Sessions which connect to a specific UPF are grouped and/or belong to a single virtual bridge. The ports on NW-TT support the connectivity to the TSN network, the ports on DS-TT side are associated to the PDU Session providing connectivity to the TSN network.

Multiple PDU sessions from a UE to different UPFs may be established for redundant traffic transmission or for traffic isolation. In this scenario, a UE configured with multiple PDU sessions to different UPFs is shared by different virtual bridges. Each DS-TT port (associated with a PDU session) belongs to one virtual bridge. Time-sensitive UE-to-UE communication for TSN via UPF is improved in 5G Release 17.

A 5GS may supports TSN time synchronization (defined by IEEE 802.1AS) across 5G-based Ethernet links with PDU-session type Ethernet. The 5GS is modelled as a time-aware system as per IEEE 802.1AS. The time error, also referred to time synchronicity budget, introduced by the 5GS shall be limited to 900ns. There are two synchronization processes running in parallel in an integrated 5G-TSN system: a 5GS synchronization process and a TSN synchronization process. TSN synchronization provides synchronization service to network nodes in the TSN network. 5GS internal synchronization provides 5G reference clock for 5GS internal synchronization wherein the gNB, the NW-TT at UPF side and the DS-TT at UE side are all synchronized to the 5G reference clock, 5G GM.

Regarding TSN synchronization, for every gPTP message entering the 5G system, 5GS, at the UPF, the NW-TT entity generates ingress timestamps, TSi, based on the 5GS internal clock and embeds the timestamp in the gPTP message. Further, the UPF forwards the gPTP message to the UE via the user plane (i.e., via a PDU session). Once the UE receives the gPTP message, the UE forwards it to the DS-TT. The DS-TT then creates an egress timestamp, TSe, for the gPTP message of the external gPTP working domain. This timestamp TSe is based on the 5GS internal clock which was provided to the UE as part of 5GS internal synchronization. The difference between TSi and TSe is considered as the calculated residence time that this gPTP message has spent within the 5GS. Now, it is proposed that, for example the DS-TT, modifies the TSN time information received from one or more gPTP message(s), preferably based on a plurality of synchronization packets such as said (g)PTP messages as proposed herein, based on the calculated 5GS residence time and/or sends it to the next time-aware system. Thus, for 5G, gPTP time information is relayed by the 5G system such that it is corrected with the 5G system residence time. To this end, 5G applies its own 5G-internal synchronization process, that synchronizes the 5G base stations and 5G user plane function, UPF, gateways to a common 5G clock. 5G UEs are also synchronized to the 5G clock over the radio interface UU. By means of time stamping of gPTP messages at ingress and/or egress, the residence time of the message in the 5G system is determined and used for updating the gPTP timing information. With Release 16, the grandmaster clock, 5G GM, may be located on the network side of the 5G system. As of Release 17, the grandmaster clock may also be connected to the 5G UE to synchronize other mobile devices of synchronization destinations on the network side. As mentioned, the time error that is introduced by the 5G system shall be limited to 900ns.

Similarly, the 5GS can also support multiple time domains including both global time and working clock domains (up to 128 working clock domains). A time domain may be characterized with a specific domain number in a gPTP message. An end station can select timing information of interest based on the domain number in the gPTP message.

In any case, within the 5GS the radio link between a base station, gNB, and user equipment, UE, is subject to propagation delay and the uncertainty associated with its estimation is considered to have a major contribution towards the 5GS time error or synchronicity budget, cf. "Time error analysis of 5G time synchronization solutions for time aware industrial networks" Patel, Dhruvin; Diachina, John; Ruffini, Stefano; De Andrade, Marilet; Sachs, Joachim; Venmani, Daniel Philip in 2021 IEEE International Symposium on Precision Clock Synchronization for Measurement, Control, and Communication (ISPCS).

The 5GS, which acts as an 802.1AS compatible time-aware system, can support time synchronization across different time domains or within a time domain. For a global time domain that is spanning the (whole) industrial automation system, 5G can distribute the global timing information to any machine, cell, line or device in the plant using a UE. For the one or more working clock domains, the time information can be either distributed inside a machine, cell, and/or line by use of existing wired network and/or using a wireless link based on a (local) time source in said time domain.

As for a TSN time domain, when there is a need for the TSN feature for scheduled traffic (802.1Qbv), e.g., for isochronous applications, the application and/or network nodes, such as TSN bridges and/or 5GS virtual bridges, may need to be synchronized to a common time within that time domain.

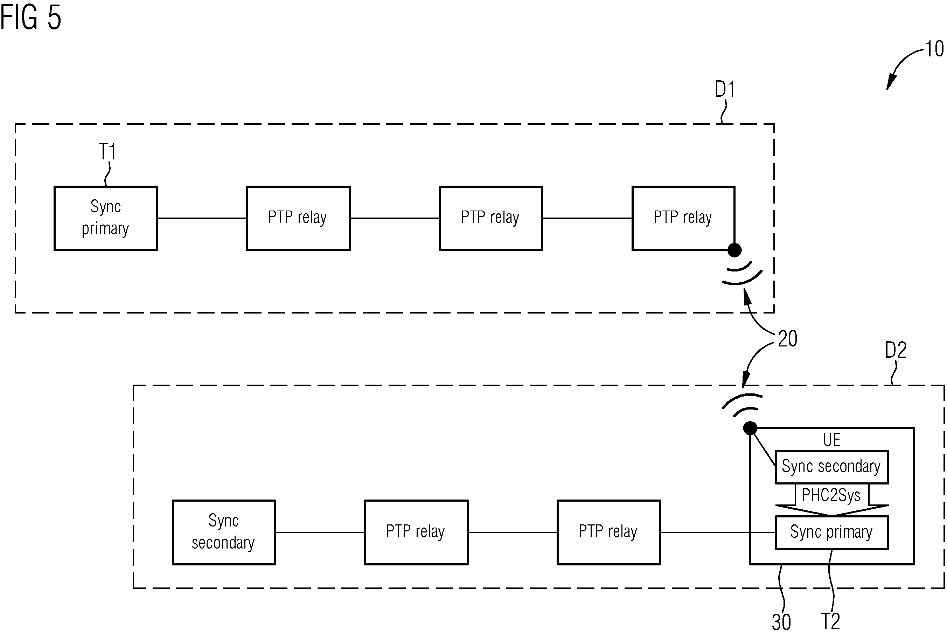

In Figure 5 synchronization between two (loosely coupled) time domains D1, D2 in a bridged network 10, e.g., a TSN network, is illustrated.

A first (wired) network segment is connected via a, preferably wireless, network, connection or link 20, e.g., 5G or WiFi6, to another wired network segment. The first network segment comprises a time and/or synchronization source T1. As shown, the time or synchronization source T1 may be a few hops over PTP relay instances away from a wireless network, connection or link 20. The time and/or synchronization information is transmitted over the, preferably, wireless, network, connection or link 20 to a second network segment. The one or more synchronization signals, e.g., in the form of one or more synchronization packets, may be forwarded through the wired and/or wireless network segments and/or network nodes by so-called PTP Relay instances, as described for example in the IEEE802.1AS-2020 standard. It should be understood that a PTP Relay instance may be a network node such as a router, switch, or bridge 30.

The time and/or synchronization information may be determined by a network node, such as apparatus 30, at the transition between the wireless network, connection or link 20, to second network segment, referred to in 5G terminology as user equipment (UE). The synchronization information may be determined, by a so-called Follow_Up synchronization message, cf. Figure 3. In the apparatus 30, a new synchronization information may be generated, e.g., by another time or synchronization source T2. Now, the generated new synchronization information may not be independent of the (original) synchronization information, but may also be loosely synchronized to the (original) synchronization information. The synchronization between the two time or synchronization domains D1, D2 is determined and/or configured as described herein. The synchronization is chosen such that a low time synchronicity budget or low time error is obtained in the second time domain or synchronization domain, i.e., in the second network segment. To that end, a slightly greater inaccuracy of the synchronization of the second (common) time with the first (common) time or first time domain or first synchronization domain is tolerated.

For example, based on the open source software PTP4Linux, PHC2Sys (Physical clock 2 system) the time source or clock of the apparatus 30, for example a UE, or more precisely the network interface to the second network segment, may be synchronized to the time source or clock present at the wireless interface, which in turn is synchronized, e.g., via PTP, with the time or synchronization source T1 in the first network segment or time domain D1. The wireless interface connects the apparatus 30 to the wireless network, connection or link. The time source T2 or clock of the network interface to the second network segment ("behind the UE") should preferably have a sufficient accuracy, since the clock or time source T2 determines the synchronization quality in the subordinate wired network depends on this time source T2 or clock. For this purpose, PHC2Sys is configured such that the time source T2 or clock of the second network segment, or more precisely of the interface to the second network segment, (loosely) follows the clock or time source T1 of the first network segment, but does not adopt the jitter resulting inter alia from a transmission over the wireless network, connection or link. It should be understood that the first network segment corresponds to the first time domain and the second network segment corresponds to the second time domain. To that end, a greater tolerance with regard to the synchronization accuracy and/or synchronization speed needs to be tolerated. This can be achieved, for example, by a small proportional part in a PI controller, e.g., of PHC2Sys, of the apparatus 30. An instance, referred to as sync secondary in Figure 5, such as said PI controller, may serve for controlling the coupling or even synchronization between the first and the second network segment, or first and second time domain, respectively. To that end, the instance, referred to as sync secondary, which may for example be said PI controller, may take the (original) synchronization signals or packets (from the time source in the first network segment) as input and/or may output the new synchronization signal for the second network segment. As a result, the timing information in the second time domain is corrected. Other implementations are also possible. For example, the timing information may be converted into the frequency domain and then filtered for a frequency range. For the latter, a low-pass filter may be used. Alternatively, an artificial neural network could be trained to detect fluctuations in the times obtained via the wireless link interface and at the same time keep the time error between the times in the second network segment, e.g., for controlling an AGV, low. To that end, predefined time tolerances can be used during the learning phase of the artificial neural network.

Thus, instead of independent time or synchronization domains D1, D2, e.g., working clocks, on the wirelessly connected time domains or network segments, such as, e.g., AGVs, or instead of an end-to-end synchronization domain over the entire network (comprising the first and second network segment) with correspondingly higher jitter, loosely coupled time or synchronization domains are proposed. Thereby, roughly the same time basis as on the first network segment is made available to the, for example wirelessly connected, second network segment. This may be achieved by correcting the common time in the second time domain to deviate up to threshold time value, for example of 1ms, from the common time in the first time domain. This slightly increased synchronization inaccuracy is acceptable for the use case of, e.g., obtaining time-correlated diagnostic information or issuing (driving) commands to several AGVs. At the same time, however, the wirelessly connected second network segment, e.g., on an AGV, may thus provide synchronization with low time error or jitter, which is required for motion control applications, for example, to control and/or drive the AGV.

In another embodiment, the described procedure is not only applicable for wirelessly connected network segments, but for all network segments, e.g., production cells where low synchronization jitter is required and which are equipped with time or synchronization domains that shall be synchronized. For example, in the case where due to the quality of the synchronization primary, the distance to the synchronization primary, and/or due to network components on the network path to the synchronization primary, the necessary synchronization accuracy is not achievable the proposed loose coupling between the time or synchronization domains may be used.

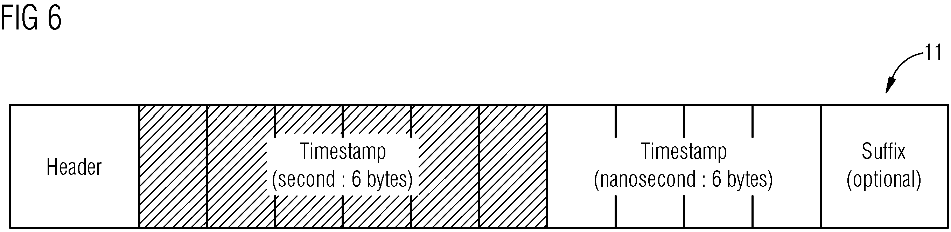

Turning to Figure 6, a synchronization packet, also referred to as synchronization message is shown.

IEEE 1588, also referred to as the PTP, is an international standard for the precise time clock synchronization of measurement and control systems used in various environments, such as communications, local computing, and distributed systems. Synchronization packets containing time-synchronization information are transmitted through routers and/or switches, providing precise time synchronization, e.g., for Ethernet-based protocols. IEEE 1588 specifies several functions for time synchronization; these include the best master clock (BMC) algorithm, which selects a clock master in a primary-secondary structure, and a method that calculates the delay and offset to synchronize the time clock of the secondary nodes with that of the primary.

PTP calculates the delay and offset through PTP messages exchanged between the primary and secondary and synchronizes their clocks. In this process, the PTP message type is determined according to the synchronization mechanism. The (g)PTP synchronization mechanism has been explained inter alia in connection with Figure 3.

A (g)PTP message may comprise a header and a timestamp, and the timestamp comprises a 6-byte-seconds field and 4-byte-nanoseconds field. PTP makes it possible to synchronize time using a network protocol, such as Ethernet. The synchronization packet may thus be an Ethernet packet that comprises a preamble of 7 bytes, a start frame delimiter, SFD, of 1 byte, a MAC destination address of 6 bytes, a MAC source address of 6 bytes, a length of 2 bytes, a payload of 46-1500 bytes and/or a frame check sequence (FCS) of 4 bytes. The timestamp point for Ethernet is the detection of the Start of Frame Delimiter (SFD).

A timestamp may be taken when the SFD byte in a network protocol packet, e.g., an Ethernet packet, passes a reference point. The timestamp for an event message is taken when the message passes the reference point at the ingress and egress of the node. The reference point can either be in software like an application, such as an PTP software block, or as an interrupt. Furthermore, hardware support may be used to determine a timestamp.

The repeated transmission and/or reception of synchronization messages like sync, delay request (or Pdelay request), and/or announce message may be used to determine and/or correct a timing information in the second time domain. Said timing information may be the common time in the second time domain or a correction factor for correcting an offset of the second common time, e.g., an estimate factor for a residence time in the 5GS, such as CRR. Hence, the plurality of synchronization packets may comprise one or more of any one of the sync, delay request, follow up, and announce messages. A follow up message will for example be sent after a sync message and will therefore have the same interval as the sync message. For example, the sync message interval, or synchronization packet transmission interval in general, may be set such that there will be multiple, e.g., 16, sync messages each second.

Now, as described herein, packet transmission may be subject to jitter and latency. Therein, jitter may be understood as the absolute jitter, which is the variance between the minimum and maximum latency across all packets. The relative jitter is the difference in latency over two messages. For example, the absolute jitter is determined by the greatest difference in the latencies of all sync messages: max(L) - min(L) .

(End-to-end) Latency describes the runtime of a message from transmitter to the receiver. In the automotive sector, unidirectional or asymmetric connections are used, which is why the end-to-end latency there is the most important type of latency. Latency may be understood as the amount of time to transmit a packet in a network. Jitter may be understood as the latency variation of the packet's transmission.

As mentioned in the above the transmission of packets such as synchronization packets is also subject to jitter, in particular due to the inaccuracies introduced by a wireless connection, link, or network, such as a 5GS.

For tight control loops, transmission jitter must be minimal, with no interference from other traffic. Messages need a guaranteed delivery time. If they arrive later than this deadline, they are ignored for that cycle or discarded, thus potentially affecting the control loop. Message sizes may be fixed at design stage and remain constant for each cycle. Payload sizes are typically under 100 bytes per device. This traffic type can be used for controller-to-controller, controller-to-I/O-communication and device-to-device.

Now, a phc2sys program, software or software block, as e.g., shown in Figure 5, may be used to synchronize the apparatus system clock to the PTP hardware clock, PHC, or vice versa.

The PHC may be located on a network interface controller providing a network interface to the second network segment or second time domain D2. In any case, the phc2sys may be given in the form of a computer program that is stored in a memory of the apparatus 30 and/or executed by a processor of the apparatus 30. The phc2sys software (block) may be configured using a configuration file.

The phc2sys software may obtain a plurality of synchronization packets from the first network segment, e.g., via said wireless link. The plurality of synchronization messages may be stored in the apparatus 30 and/or may be processed successively, i.e., one after the other. The apparatus 30 may then correct the timing information in the second time domain based on the plurality of synchronization packets, e.g., by processing the synchronization packets, preferably the time stamp of each of the plurality of synchronization packets, for example by the phc2sys software. The phc2sys software may then adjust the PHC clock of the apparatus. Subsequently, events in the second network segment may be generated and/or one or more timestamps may be created based on this adjusted PHC clock, or clock or time source in general, in the second network segment.

Further exemplary embodiments are described in connection with Figures 7 to 16 and Figure 17.

Exemplary method steps of a method of time synchronization (or loose time-wise coupling) between a first and a second time domain in a bridged network are shown in Figure 7. In a step S1 a plurality of time synchronization packets are transmitted from a first to a second time domain over a, preferably wireless, communication link. That is a plurality of time synchronization packets from a first time domain are received in a second time domain over a, preferably wireless, communication link. Hitherto, the synchronization packets may be transmitted by a network node in the first time domain and received by a network node in the second time domain. The synchronization packets may be generated by a time source in the first time domain. A network node may be a switch, bridge or device or apparatus. The network node in the second time domain (receiving the plurality of synchronization packets) may generate timing information for the second time domain, e.g., a common time in the second time domain. That is, the network node in the second time domain (receiving the plurality of synchronization packets) may serve as or comprise a time source for the second time domain. To that end, the network node in the second time domain (receiving the plurality of synchronization packets) may generate one or more synchronization packets for synchronization of the network nodes in the second time domain. In a step S2, a timing information in the second time domain is corrected based on the plurality of synchronization packets (received from the time source in first time domain). That is, more than one synchronization packet is used for correcting the timing information in the second time domain as disclosed herein. Preferably, a number of n synchronization packets are used for correcting the timing information in the second time domain. Therein, n is larger than or equal to 2, 3, 4, 5, 6, 7, 8, 9, 10, 11, 12, 13, 14, 15, or 16. Hence, a (loose) coupling between the first and the second time domain may be achieved. The coupling is not dependent on only one time synchronization packet but rather takes into account variations of the transmission time such as jitter and/or such as delay in the first time domain and/or over the (wireless) link connecting the two time domains by taking into account said plurality of synchronization packets.

Thus, a certain synchronicity between the time sources in the first and second time domain is proposed. The maximum allowed time offset between the two time domains shall be below but up to a threshold value, e.g., of 1 ms. Thus, the two time domains are loosely coupled. Thus, one or more network nodes and/or applications in the first time domain D1 are synchronized to a first common time, for example based on a first time source T1, e.g., a first clock, and one or more network nodes and/or applications in the second time domain D2 are synchronized to a second common time, for example based on a second time source (T2), e.g., a second clock. Therein the second common time may be corrected to deviate up to a threshold time value, e.g., of 1ms, from the first common time.

Furthermore, a time synchronicity budget in the first time domain preferably is below a threshold value, e.g., of 1µs, and wherein in order to compensate for a jitter introduced by the, for example wireless, communication link, the second common time is corrected to deviate up to a threshold time value, e.g., of 1ms, from the first common time. Thus, the second time domain may have a time synchronicity budget below the same threshold value, e.g., of said 1µs.

Turning to Figure 8 further exemplary steps are shown. As before, in a step S1 a plurality of time synchronization packets transmitted from a first to a second time domain over a, preferably wireless, communication link are received, e.g. by network node in the second time domain. In a step S3, a timing jitter is determined for each one of the plurality of time synchronization packets. Furthermore, a deviation from the mean value of the synchronization packets may be used or a deviation from a pre-determined or expected time of arrival of the one or more synchronization packets may be used. The jitter may also be determined based on the variance between the minimum and maximum latency across a plurality of synchronization packages. The jitter may also be determined as the difference in latency over two or more synchronization packets. In a step S4, a timing information in the second time domain is corrected based on the plurality of timing jitters. That is, the timing information included in or given by one or more synchronization packets in the second time domain may corrected based on the synchronization packets and/or timing jitters. For example, a timestamp of one or more synchronization packets in the second time domain may be adjusted or corrected (based on the timing jitters).

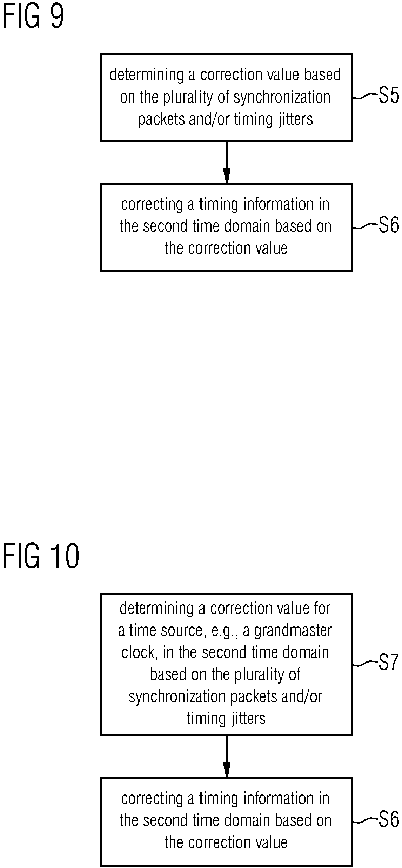

Now turning to Figure 9, further exemplary steps are described. In a step S5, a correction value based on the plurality of synchronization packets and/or timing jitters may be determined. That is, a correction value may take the form of a couple of microseconds and/or nanoseconds which shall be added or deducted to the time values of the time source in the second time domain. As a result, one or more corrected or adjusted time stamps in the second time domain may be obtained. Thus, as before, in a step S6, a timing information in the second time domain may be corrected based on the correction value.

Thus, as shown step S7 in Figure 10, a correction value for a time source, e.g., a grandmaster clock, in the second time domain may be determined based on the plurality of synchronization packets and/or timing jitters. Then, as already described herein, in a step S6 a timing information in the second time domain may be corrected based on the correction value.

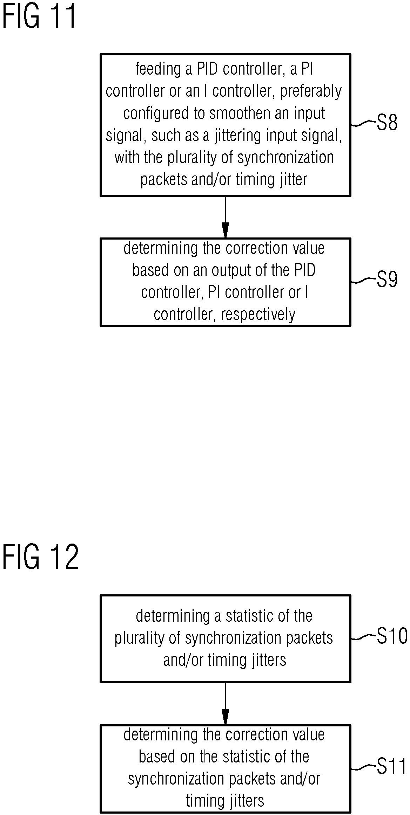

As show in figure 11, in a step S8, a PID-controller, a PI-controller or an I-controller, preferably configured to smoothen an input signal, such as a jittering input signal, may be fed with the plurality of synchronization packets and/or timing jitter. The PID-controller, PI-controller or the I-controller, as the case may be, may receive the plurality of synchronization packets and/or timing jitter as an input. The PID-controller, PI-controller or the I-controller, as the case may be, may be configured to smoothen the signals input. To that end, the PID-controller, PI-controller or the I-controller, as the case may be, may be configured accordingly, for example with a comparatively small proportional part. In a step S9, the correction value may then be determined based on an output of the PID-controller, PI-controller or I-controller, respectively. The PID-controller, PI-controller or I-controller, respectively may thus output a correction value. The correction value may be used as described herein to correct the timing information in the second time domain.

According to a step S10, as shown in Figure 12, a statistic of the plurality of synchronization packets and/or timing jitters may be determined. Said statistic may be a mean value, a deviation and/or a variance, e.g., of the latency, jitter and/or time stamps, of (each one of) the plurality of synchronization packets. In a step S11, similarly as before, the correction value may be determined based on the statistic of the synchronization packets and/or timing jitters.

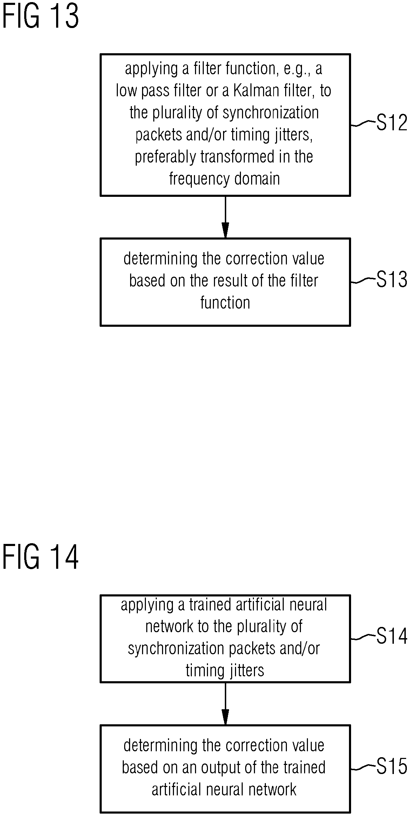

Turning to Figure 13 steps for determining a correction value are shown. In a step S12, a filter function, e.g., a low-pass filter or a Kalman-filter, may be applied to the plurality of synchronization packets and/or timing jitters, preferably transformed in the frequency domain. For example, the time stamp of (each one of) the plurality of synchronization packets, e.g., given by the start frame delimiter of a synchronization packet, may be determined and/or transformed into the frequency domain. Then the correction value may be determined based on the result of the filter function in a step S13.

Turning to Figure 14 steps for determining a correction value are shown. In a step S14, a trained artificial neural network may be applied to the plurality of synchronization packets and/or timing jitters. The trained artificial neural network may take the plurality of synchronization packets, e.g., the timestamps thereof, and/or timing jitters as input, e.g., in a subsequent manner. The correction value may then be determined by the trained artificial neural network and provided as an output of the trained artificial neural network in a step S15. It should be understood that the artificial neural network may be trained beforehand, based on a suitable set of training data comprising a plurality of synchronization packets, e.g., the timestamps thereof, and/or timing jitters. The training can be optimized for providing an average mean or median value of the plurality of synchronization packets, e.g., the timestamps thereof, and/or timing jitters as an output.

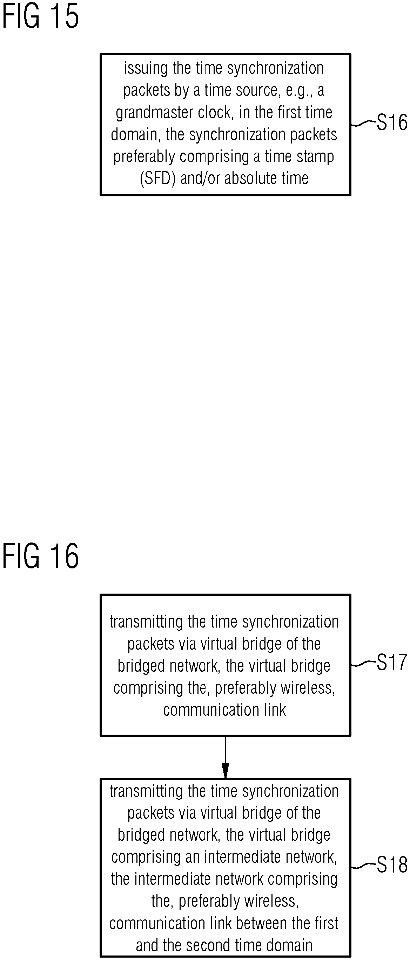

The time synchronization packets, i.e. the plurality of synchronization packets, may be issued by a time source, e.g., a grandmaster clock, in the first time domain, the synchronization packets preferably comprising a time stamp and/or absolute time as shown in step S16 of Figure 15.

According to step S17 in Figure 16, the (plurality of) time synchronization packets is transmitted via virtual bridge of the bridged network, the virtual bridge comprising the, preferably wireless, communication link. The (plurality of) time synchronization packets may be transmitted via virtual bridge of the bridged network, the virtual bridge comprising an intermediate network, the intermediate network comprising the, preferably wireless, communication link between the first and the second time domain as shown in step S18.

Turning to Figure 17 a network node such as a switch, bridge or router is shown. The network node may be incorporated as an apparatus or device in hardware. The network node may comprise a first interface I1, such as a port, for receiving the plurality of synchronization packets from the first time domain. The network node may comprise a second interface I2, such as a port, for transmitting timing information in the second time domain. Furthermore, the network node may comprise a processor and a memory for performing the method steps as described herein. To that end, program code may be stored in said memory and may be executed by said processor. The program code may serve for executing by the processor the method steps as described herein. The program code may implement a software, such as PHC2SYS, for synchronizing the apparatus' system clock to a time source, e.g., PTP hardware clock (PHC), in the first time domain. The program code may implement a software, such as PHC2SYS, for synchronizing a clock, e.g., PTP hardware clock (PHC), in the second time domain to the apparatus' system clock. Additionally or alternatively, the method steps may be implemented at least in part in hardware, e.g. by an ASIC or FPGA. Hence, a bridge, switch, and/or router may comprise such hardware, e.g. in the form of an integrated circuit, IC. Hence, the forwarding of packet, also denoted as frames, may be performed in said dedicated hardware of said switch, bridge or router. Only frames requiring special treatment, such as PTP frames, may be processed by a processor executing the program code. However, there are bridges, switches or routers which implement the PTP protocol in hardware.

## Claims

1. A method of time synchronization between a first and a second time domain (D1, D2) in a bridged network (10), the method comprising the steps of:
transmitting a plurality of time synchronization packets (11) from the first to the second time domain (D1, D2) over a,
preferably wireless, communication link (20), and
correcting a timing information in the second time domain (D2) based on the plurality of synchronization packets (11).

2. The method according to the preceding claim,
wherein one or more network nodes and/or applications in the first time domain (D1) are synchronized to a first common time, for example based on a first time source (T1), e.g., a first clock, and one or more network nodes and/or applications in the second time domain (D2) are synchronized to a second common time, for example based on a second time source (T2), e.g., a second clock,
wherein most preferably the second common time is corrected to deviate up to a threshold time value, e.g., of 1ms, from the first common time.

3. The method according to any one of the preceding claims, wherein a time synchronicity budget in the first time domain is below a threshold value, e.g., of 1µs, and wherein in order to compensate for a jitter introduced by the, preferably wireless, communication link, the second common time is corrected to deviate up to a threshold time value, e.g., of 1ms, from the first common time, and/or a time synchronicity budget in the second time domain is below said threshold value, e.g., of said 1µs.

4. The method according to any one of the preceding claims, further comprising
determining a timing jitter for each one of the plurality of time synchronization packets (11), and
correcting the timing information in the second time domain based on the plurality of timing jitters.

5. The method according to any one of the preceding claims, further comprising
determining a correction value based on the plurality of synchronization packets (11) and/or timing jitters,
correcting a timing information in the second time domain (D2) based on the correction value.

6. The method according to any one of the preceding claims, further comprising
determining a correction value for a time source (T2), e.g., a grandmaster clock, in the second time domain (D2) based on the plurality of synchronization packets (11) and/or timing jitters.

7. The method according to any one of the preceding claims, further comprising
feeding a PID-controller, a PI-controller or an I-controller, preferably configured to smoothen an input signal, such as a jittering input signal, with the plurality of synchronization packets (11) and/or timing jitters and,
determining the correction value based on an output of the PID-controller, PI-controller or I-controller, respectively.

8. The method according to any one of the preceding claims, further comprising
determining a statistic of the plurality of synchronization packets (11) and/or timing jitters and,
determining the correction value based on the statistic of the synchronization packets (11) and/or timing jitters.

9. The method according to any one of the preceding claims, further comprising
applying a filter function, e.g., a low-pass filter or a Kalman-filter, to the plurality of synchronization packets and/or timing jitters, preferably transformed in the frequency domain, and,
determining the correction value based on the result of the filter function.

10. The method according to any one of the preceding claims, further comprising
applying a trained neural network to the plurality of synchronization packets and/or timing jitters,
determining the correction value based on an output of the trained neural network.

11. The method according to any one of the preceding claims, further comprising
issuing the time synchronization packets (11) by a time source, e.g., a grandmaster clock, in the first time domain (D1), the synchronization packets preferably comprising a time stamp (SFD) and/or absolute time.

12. The method according to any one of the preceding claims, further comprising
transmitting the time synchronization packets via virtual bridge (21) of the bridged network, the virtual bridge (21) comprising the, preferably wireless, communication link.

13. The method according to any one of the preceding claims, further comprising
transmitting the time synchronization packets (11) via a virtual bridge (21) of the bridged network, the virtual bridge (21) comprising an intermediate network, the intermediate network comprising the, preferably wireless, communication link between the first and the second time domain.

14. An apparatus (30) operative to perform any one of the method steps of any one of the preceding claims.

15. An apparatus (30), such as a router, switch or network bridge, preferably comprising a processor and a memory,
the apparatus (30) operative to synchronize time between a first and a second time domain in a bridged network (10),
the apparatus (30) operative to receive a plurality of time synchronization packets from the first time domain (D1) over a, preferably wireless, communication link,
the apparatus (30) operative to correct a timing information in the second time domain (D2) based on the plurality of synchronization packets (11).

16. The apparatus (30) according to the preceding claim,
the apparatus (30) comprising a network interface (card) for receiving the time synchronization packets,
the apparatus (30) comprising a software, e.g., PHC2SYS, for synchronizing the apparatus' system clock to a time source, e.g., PTP hardware clock (PHC), in the first time domain (D1), and/or
the apparatus (30) comprising a software, e.g., PHC2SYS, for synchronizing a clock, e.g., PTP hardware clock (PHC), in the second time domain (D2) to the apparatus' system clock.

17. A bridged network (10) comprising a first and a second time domain (D1, D2) coupled by an apparatus (30) according to the preceding claims 14 to 16.

18. A computer program, preferably stored on a non-transitory medium, comprising program code that when executed performs the method steps of any one of the preceding claims 1 to 13.
